# EUROPEAN PATENT SPECIFICATION

(11) **EP 4 538 522 B1**
(45) Date of publication and mention of the grant of the patent: **18.02.2026**
(21) Application number: 22945689.2
(22) Date of filing: 06.06.2022
(51) Int. Cl.: F02F 7/00, B60K 5/12

(54) **INTERNAL COMBUSTION ENGINE**
BRENNKRAFTMASCHINE
MOTEUR À COMBUSTION INTERNE

(43) Date of publication of application: 16.04.2025
(73) Proprietor: NISSAN MOTOR CO., LTD., Kanagawa 221-0023 (JP)
(72) Inventor: YABE, Tadashi, Atsugi-shi, Kanagawa 243-0123 (JP)
(74) Representative: Hoefer & Partner Patentanwälte mbB
(86) International application number: PCT/JP2022/022738
(87) International publication number: WO 2023/238177

(56) References cited:
- WO-A1-2020/183687
- JP-A- 2006 242 138
- JP-A- 2010 116 020
- JP-A- 2015 071 996
- JP-A- 2018 084 172
- US-A- 4 508 072

## Description

### TECHNICAL FIELD

The present invention relates to an internal combustion engine mounted on a vehicle.

### BACKGROUND ART

For instance, Patent Document 1 discloses a configuration in which a mounting seat for an engine mounting bracket is provided at an end cover located on one end side of an engine body and covering a camshaft drive mechanism.

In Patent Document 1, however, since vibration on a vehicle body side is transmitted to the end cover through the mounting seat, there is a risk that membrane vibration (or film vibration) will occur.

That is, the end cover of Patent Document 1 is not sufficiently taken into consideration for reducing its own membrane vibration, and there is room for further improvement in reduction in the membrane vibration.

### CITATION LIST

### PATENT DOCUMENT

Patent Document 1: Japanese Unexamined Patent Application Publication No. JPH07-259578
Patent document 2: JP 2006 242138 A

### SUMMARY OF THE INVENTION

An internal combustion engine of the present invention comprises: a resin front cover covering an end surface, located at one end side in a cylinder line direction, of an internal combustion engine body; and a metal mounting bracket located at the one end side in the cylinder line direction of the internal combustion engine body and connecting the internal combustion engine body to a vehicle. The mounting bracket overlaps the front cover in the cylinder line direction of the internal combustion engine body so as to cover a part of an outer surface of the front cover with a predetermined gap provided between the mounting bracket and the front cover. The mounting bracket has a boss portion which penetrates a through hole formed at the front cover and which is fixed to the end surface, located at the one end side in the cylinder line direction, of the internal combustion engine body. A gap is provided between the through hole and the boss portion so that these through hole and boss portion do not come into contact with each other.

In the internal combustion engine of the present invention, since the internal combustion engine-side mounting bracket and the front cover do not come into contact with each other, vibration from the vehicle side (the vehicle body side) is not transmitted from the internal combustion engine-side mounting bracket to the front cover, thereby suppressing membrane vibration (or film vibration) that occurs at the front cover.

### RIEF DESCRIPTION OF THE DRAWINGS

Fig. 1 is an explanatory drawing schematically showing a configuration of an internal combustion engine to which the present invention is applied.
Fig. 2 is an explanatory drawing schematically showing one end side, in a cylinder line direction, of the internal combustion engine to which the present invention is applied.
Fig. 3 is a front view of a front cover.
Fig. 4 is a front view of the internal combustion engine to which an internal combustion engine-side mounting bracket is attached.
Fig. 5 is an exploded perspective view of the front cover and the internal combustion engine-side mounting bracket.
Fig. 6 is a perspective view of the internal combustion engine-sidemountingbracket, viewed fromitsback surface side.
Fig. 7 is an explanatory drawing schematically showing a main part of the internal combustion engine according to the present invention.

### EMBODIMENTS FOR CARRYING OUT THE INVENTION

An embodiment of the present invention will be described in detail below with reference to the drawings. In the drawings, an X-axis indicates an axis along a front-rear direction of an internal combustion engine 1 (an axis parallel to a center axis of a crankshaft 19 of the internal combustion engine 1), a Y-axis indicates an axis along a right-left direction of the internal combustion engine 1 (an axis along a width direction of the internal combustion engine 1), and a Z-axis indicates an axis along an up-down direction (a vertical direction) of the internal combustion engine 1 (an axis parallel to a cylinder axis A of the internal combustion engine 1). That is, the X-axis is an axis along a cylinder line direction of the internal combustion engine 1 or an internal combustion engine body 8 (described later). The Y-axis is an axis along a width direction of the internal combustion engine body **8.**

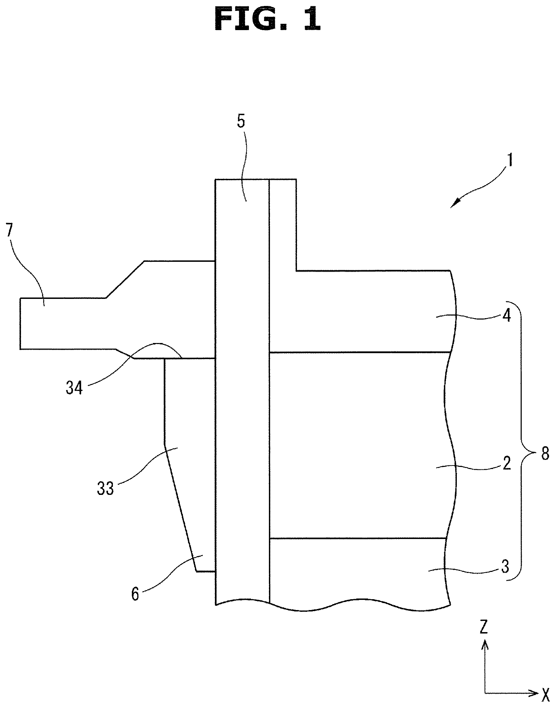

Fig. 1 is an explanatory drawing schematically showing a configuration of the internal combustion engine 1 to which the present invention is applied.

The internal combustion engine 1 is, for instance, an in-line multi-cylinder internal combustion engine. The internal combustion engine 1 has a cylinder head 2, a cylinder block 3 fixed to a lower portion of the cylinder head 2, a cam bracket 4 fixed to an upper portion of the cylinder head 2, a front cover 5 covering a front surface of the internal combustion engine body 8 and a metal internal combustion engine-side mounting bracket 6 arranged above a front surface of the front cover 5. In Fig. 1, a reference sign 7 is a vehicle body-side mounting bracket fixed to a vehicle body side. The cylinder head 2, the cylinder block 3 and the cam bracket 4 form the internal combustion engine body 8. Therefore, the front cover 5 covers an end surface, located at one end side in the cylinder line direction, of the internal combustion engine body 8.

The cylinder head 2 is a casting made of metal material such as aluminum alloy. An intake port (not shown) for supplying intake air into a combustion chamber (not shown) and an exhaust port (not shown) for exhausting exhaust gas from the combustion chamber (not shown) are formed at the cylinder head 2.

The cylinder block 3 is a casting made of metal material such as aluminum alloy, and has cylinders (not shown) whose number corresponds to the number of the cylinders.

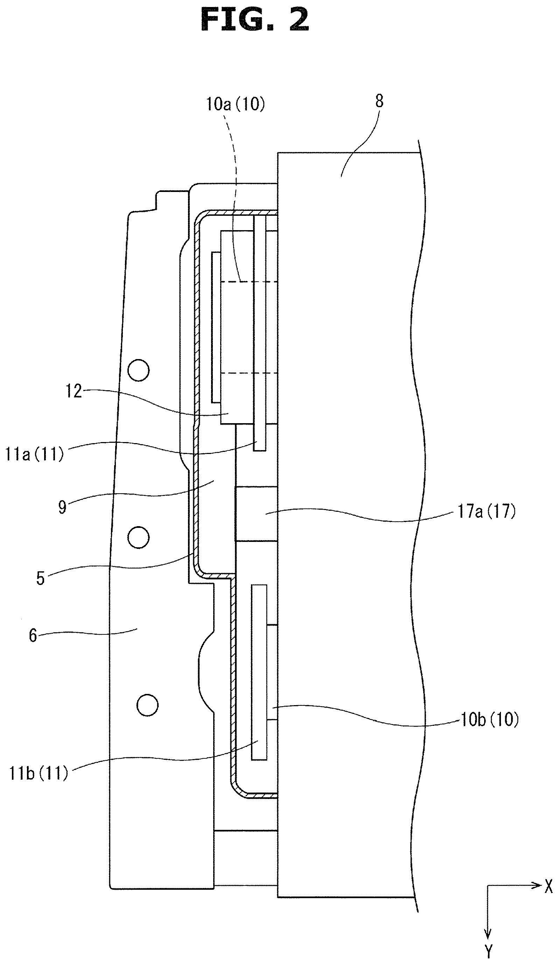

The cam bracket 4 is made of metal material such as aluminum alloy. The cam bracket 4 rotatably supports a camshaft 10 (see Fig. 2) together with the cylinder head 2.

The front cover 5 is made of synthetic resin material such as polyamide. The front cover 5 is liquid-tightly attached to the internal combustion engine body 8 so as to cover the front surface of the internal combustion engine body 8. More specifically, the front cover 5 is secured to a front surface of the cylinder block 3, a front surface of the cylinder head 2, a front surface of the cam bracket 4 etc. with bolts (not shown) . In other words, the front cover 5 is attached to the internal combustion engine body 8 so as to cover end surfaces, located at one end sides in the crankshaft axial direction, of the cylinder block 3 and the cylinder head 2, i.e. so as to cover the end surface, located at one end side in the cylinder line direction, of the internal combustion engine body 8.

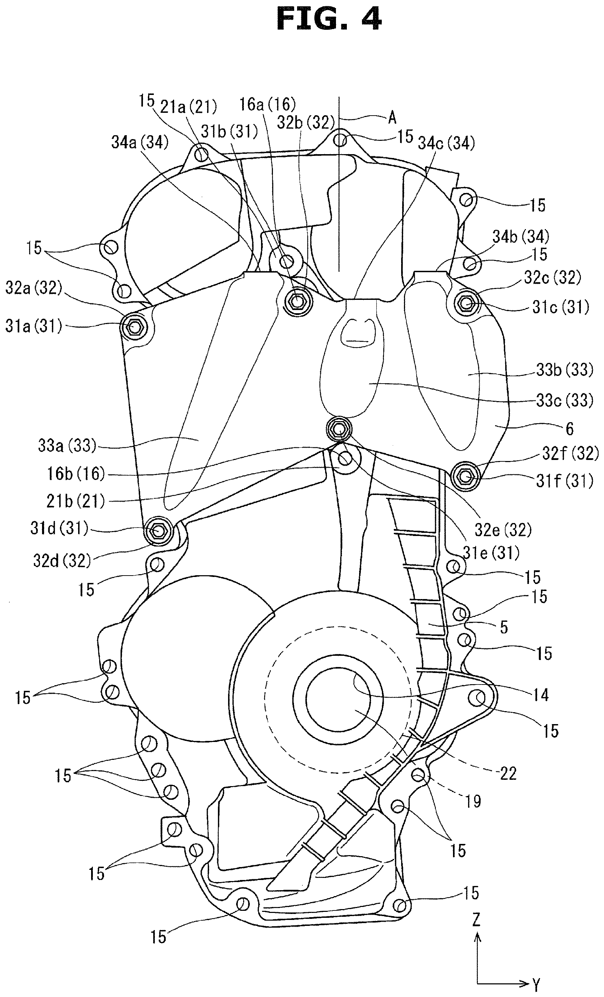

As illustrated in Fig. 2, the front cover 5 has a shallow dish shape, and a space 9 is formed between the front cover 5 and the front surface of the internal combustion engine body 8 which is the end surface, located at one end side in the cylinder line direction, of the internal combustion engine body 8. Fig. 2 is an explanatory drawing schematically showing one end side, in the cylinder line direction, of the internal combustion engine 1, when viewed from above. A crank sprocket (not shown) fixed to the crankshaft 19 (see Fig. 4) and a cam sprocket 11 fixed to a front end of the camshaft 10 are accommodated in the space 9. A timing chain (not shown) for transmitting rotation power is would around these crank sprocket and cam sprocket 11.

An intake cam sprocket 11a and a variable phase mechanism (variable valve mechanism) 12 are attached to a front end of an intake camshaft 10a. The variable phase mechanism 12 is a mechanism that changes a valve timing of an intake valve by changing a phase of a lift center angle of the intake valve. An exhaust cam sprocket 11b is attached to a front end of an exhaust camshaft 10b.

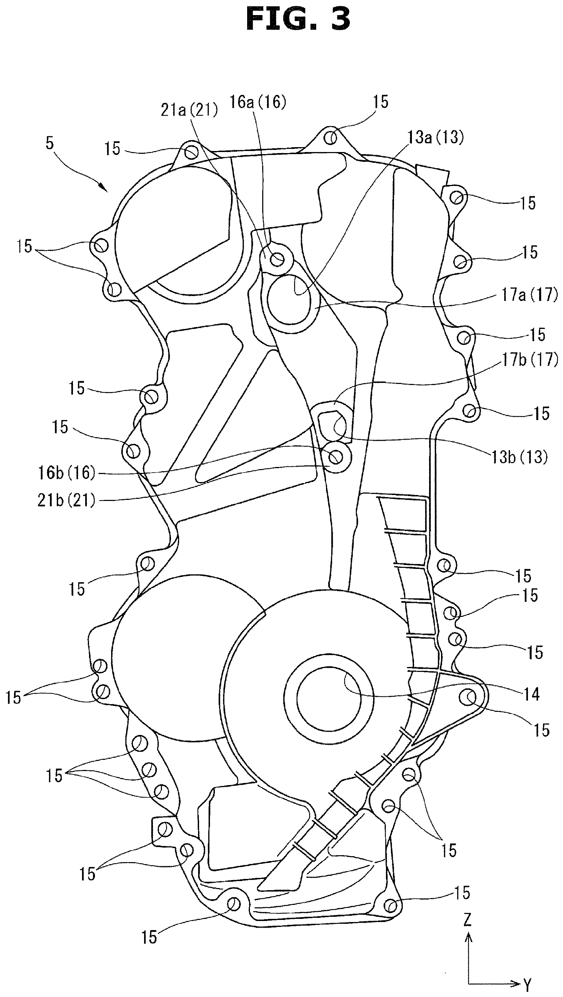

As illustrated in Figs. 3 and 4, boss portion through holes 13, a crankshaft through hole 14, first bolt through holes 15 and second bolt through holes 16 are formed on the front cover 5. Fig. 3 is a front view of the front cover 5. Fig. 4 is a front view of the internal combustion engine 1 to which the internal combustion engine-side mounting bracket 6 is attached.

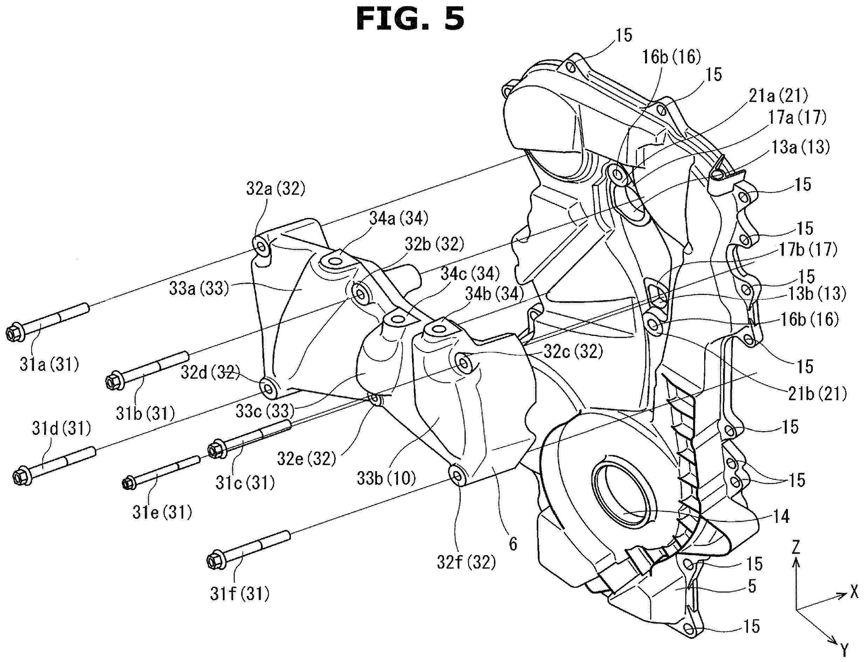

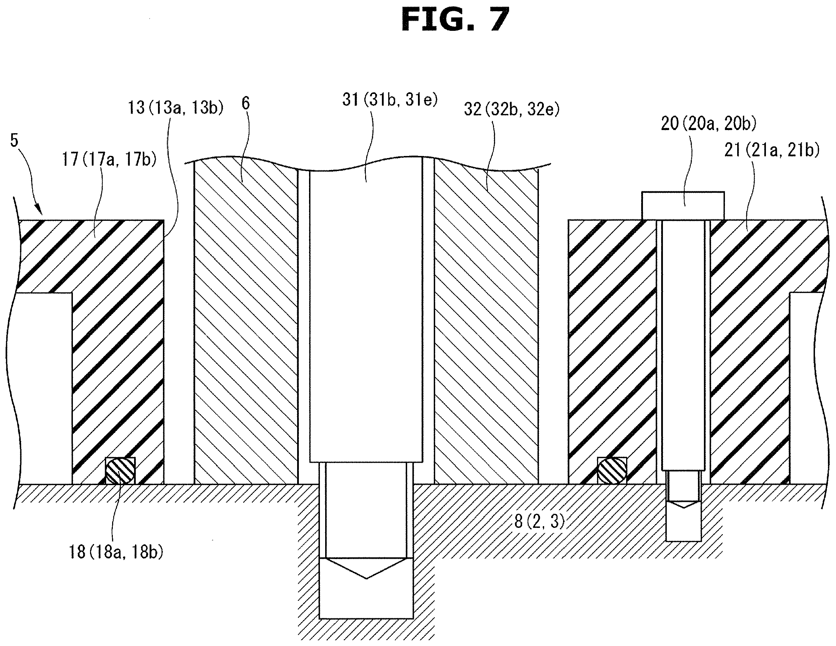

The boss portion through holes 13 are holes which bolt boss portions 32 (see Fig. 5) of the internal combustion engine-side mounting bracket 6 penetrate. The boss portion through holes 13 are formed at two positions located at a middle portion, in the width direction of the internal combustion engine body 8, of the front cover 5. An outer peripheral edge of each of the boss portion through hole 13 is an annular (a tubular) through hole peripheral edge portion (an annular (a tubular) bolt through hole peripheral edge portion) 17. The through hole peripheral edge portions 17 are pressed against the end surface, located at one end side in the cylinder line direction, of the internal combustion engine body 8 and are in contact with this end surface of the internal combustion engine body 8 on a rear surface side of the front cover 5. The middle portion of the front cover 5 is then supported on the internal combustion engine body 8. Gaps between the through hole peripheral edge portions 17 and the internal combustion engine body 8 are liquid-tightly sealed by sealing members 18 (see Fig. 7) .

A boss portion through hole 13a is a through hole which a second bolt boss portion 32b (see Fig. 5) penetrates. A through hole peripheral edge portion 17a is formed at a periphery of the boss portion through hole 13a. The through hole peripheral edge portion 17a is pressed against the cylinder head 2 on the rear surface side of the front cover 5.

A boss portion through hole 13b is a through hole which is located at a lower side of the boss portion through hole 13a, and which a fifth bolt boss portion 32e (see Fig. 5) penetrates. A through hole peripheral edge portion 17b is formed at a periphery of the boss portion through hole 13b. The through hole peripheral edge portion 17b is pressed against the cylinder block 3 on the rear surface side of the front cover 5.

The crankshaft through hole 14 is a through hole which the crankshaft 19 penetrates. The crankshaft through hole 14 is formed at a lower side with respect to the boss portion through holes 13.

The first bolt through holes 15 are through holes which bolts (not shown) for fixing the front cover 5 to the internal combustion engine body 8 penetrate. The plurality of (a number of) first bolt through holes 15 are formed at an outer periphery of the front cover 5.

The second bolt through holes 16 are through holes which fixing bolts 20 (see Fig. 7) for fixing the front cover 5 to the internal combustion engine body 8 penetrate. The second bolt through holes 16 are formed at front cover boss portions 21 adjacent to the respective through hole peripheral edge portions 17. That is, the front cover boss portions 21 are fixed to the end surface, located at one end side in the cylinder line direction, of the internal combustion engine body 8 on the rear surface side of the front cover 5 with top end surfaces of the front cover boss portions 21 being pressed against the end surface of the internal combustion engine body 8.

A front cover boss portion 21a is fixed to the cylinder head 2 on the rear surface side of the front cover 5 with a top end surface of the front cover boss portion 21a being pressed against the cylinder head 2. A front cover boss portion 21b is fixed to the cylinder block 3 on the rear surface side of the front cover 5 with a top end surface of the front cover boss portion 21b being pressed against the cylinder block 3.

The front cover boss portion 21a is formed so as to adjacently continue to the through hole peripheral edge portion 17a. A second bolt through hole 16a is formed at the front cover boss portion 21a. The front cover boss portion 21b is formed so as to adjacently continue to the through hole peripheral edge portion 17b. A second bolt through hole 16b is formed at the front cover boss portion 21b.

Here, a crank pulley 22 is attached to a front end of the crankshaft 19. An auxiliary machine drive belt (not shown) is wound around the crank pulley 22. The crank pulley 22 is located at an outer side of the front cover 5, and drives auxiliary machines (not shown) such as a water pump through the auxiliary machine drive belt.

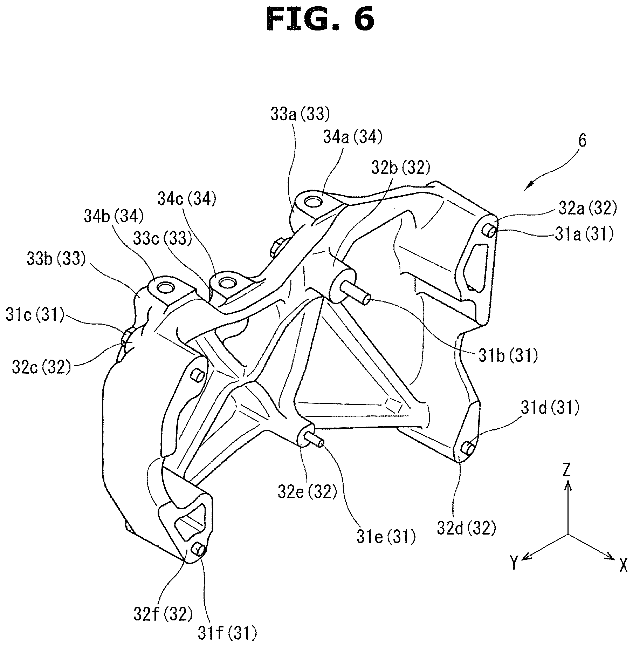

The internal combustion engine-side mounting bracket 6 corresponds to a mounting bracket, and is secured to the end surface, located at one end side in the cylinder line direction, of the internal combustion engine body 8 without coming into contact with the front cover 5. The internal combustion engine-side mounting bracket 6 is a casting made of metal material such as aluminum alloy. As illustrated in Figs. 5 and 6, the internal combustion engine-side mounting bracket 6 is connected to the end surfaces, located at one end sides, of the cylinder head 2 and the cylinder block 3 with six bolts 31 of a first bolt 31a to a sixth bolt 31f. The bolts 31 penetrate respective bolt boss portions 32 of the internal combustion engine-side mounting bracket 6.

Fig. 5 is an exploded perspective view of the front cover 5 and the internal combustion engine-side mounting bracket 6 which are connected to the internal combustion engine body 8. Fig. 6 is a perspective view of the internal combustion engine-side mounting bracket 6, viewed from its back surface side (its rear side).

The internal combustion engine-side mounting bracket 6 is formed so that its length along the width direction of the internal combustion engine body 8 is longer than that of the front cover 5. As illustrated in Figs. 2 and 4, the internal combustion engine-side mounting bracket 6 overlaps the front cover 5 in the cylinder line direction of the internal combustion engine body 8 so as to cover a part of an outer surface of the front cover 5 with a predetermined gap provided between the internal combustion engine-side mounting bracket 6 and the front cover 5, and is connected to the internal combustion engine body 8. That is, the internal combustion engine-side mounting bracket 6 is connected to the internal combustion engine body 8 so as not to come into contact with the front cover 5 in the cylinder line direction of the internal combustion engine body 8.

As illustrated in Figs. 4 to 6, the internal combustion engine-side mounting bracket 6 has the six bolt boss portions 32 of a first bolt boss portion 32a to a sixth bolt boss portion 32f. The internal combustion engine-side mounting bracket 6 does not come into contact with the front cover 5, and these six bolt boss portions 32 do not come into contact with the front cover 5.

The first bolt 31a fixes an upper portion, located at one end side in the internal combustion engine width direction, of the internal combustion engine-side mounting bracket 6 to the cylinder head 2 outside the front cover 5. The first bolt 31a penetrates the first bolt boss portion 32a of the internal combustion engine-side mounting bracket 6. The first bolt boss portion 32a is formed at one end side, in the width direction of the internal combustion engine body 8, of the internal combustion engine-side mounting bracket 6.

The second bolt 31b penetrates the front cover 5, and fixes an upper portion, located at the substantially middle in the internal combustion engine width direction, of the internal combustion engine-side mounting bracket 6 to the cylinder head 2. The second bolt 31b penetrates the second bolt boss portion 32b of the internal combustion engine-side mounting bracket 6. The second bolt boss portion 32b is formed at a middle portion, in the width direction of the internal combustion engine body 8, of the internal combustion engine-side mounting bracket 6.

As illustrated in Fig. 7, the second bolt boss portion 32b penetrates the boss portion through hole 13a of the front cover 5 so that an outer peripheral surface of the second bolt boss portion 32b does not come into contact with an inner peripheral surface of the boss portion through hole 13a. Fig. 7 is a sectional view schematically showing a vicinity of the boss portion through hole 13. A top end portion, on the rear surface side of the front cover 5, of the second bolt boss portion 32b is pressed against the cylinder head 2. A portion, located on the rear surface side of the front cover 5, of the through hole peripheral edge portion 17a where the boss portion through hole 13a is formed is pressed against the cylinder head 2. A gap between the through hole peripheral edge portion 17a and the cylinder head 2 on the rear surface side of the front cover 5 is liquid-tightly sealed by an annular sealing member 18a. The front cover boss portion 21a adjacent to the boss portion through hole 13a is fixed to the cylinder head 2 with a fixing bolt 20a.

The third bolt 31c fixes an upper portion, located at the other end side in the internal combustion engine width direction, of the internal combustion engine-side mounting bracket 6 to the cylinder head 2 outside the front cover 5. The third bolt 31c penetrates the third bolt boss portion 32c of the internal combustion engine-side mounting bracket 6. The third bolt boss portion 32c is formed at the other end side, in the width direction of the internal combustion engine body 8, of the internal combustion engine-side mounting bracket 6.

The fourth bolt 31d fixes a lower portion, located at the one end side in the internal combustion engine width direction, of the internal combustion engine-side mounting bracket 6 to the cylinder block 3 outside the front cover 5. The fourth bolt 31d penetrates the fourth bolt boss portion 32d of the internal combustion engine-side mounting bracket 6. The fourth bolt boss portion 32d is formed at one end side, in the width direction of the internal combustion engine body 8, of the internal combustion engine-side mounting bracket 6.

The fifth bolt 31e penetrates the front cover 5, and fixes a lower portion, located at the substantially middle in the internal combustion engine width direction, of the internal combustion engine-side mounting bracket 6 to the cylinder block 3. The fifth bolt 31e penetrates the fifth bolt boss portion 32e of the internal combustion engine-side mounting bracket 6. The fifth bolt boss portion 32e is formed at a middle portion, in the width direction of the internal combustion engine body 8, of the internal combustion engine-side mounting bracket 6.

As illustrated in Fig. 7, the fifth bolt boss portion 32e penetrates the boss portion through hole 13b of the front cover 5 so that an outer peripheral surface of the fifth bolt boss portion 32e does not come into contact with an inner peripheral surface of the boss portion through hole 13b. A top end portion, on the rear surface side of the front cover 5, of the fifth bolt boss portion 32e is pressed against the cylinder block 3. A portion, located on the rear surface side of the front cover 5, of the through hole peripheral edge portion 17b where the boss portion through hole 13b is formed is pressed against the cylinder block 3. A gap between the through hole peripheral edge portion 17b and the cylinder block 3 on the rear surface side of the front cover 5 is liquid-tightly sealed by an annular sealing member 18b. The front cover boss portion 21b adjacent to the boss portion through hole 13b is fixed to the cylinder block 3 with a fixing bolt 20b.

The sixth bolt 31f fixes a lower portion, located at the other end side in the internal combustion engine width direction, of the internal combustion engine-side mounting bracket 6 to the cylinder block 3 outside the front cover 5. The sixth bolt 31f penetrates the sixth bolt boss portion 32f of the internal combustion engine-side mounting bracket 6. The sixth bolt boss portion 32f is formed at the other end side, in the width direction of the internal combustion engine body 8, of the internal combustion engine-side mounting bracket 6.

As illustrated in Figs. 3 and 4, the internal combustion engine-side mounting bracket 6 has a plurality of (three) mounting portions 33. The mounting portions 33 are portions for securing the internal combustion engine 1 to the vehicle body, and their upper end surfaces 34 are fixed to the vehicle body-side mounting brackets 7 with bolts (not shown) . The mounting portion 33 is formed so as to extend in the up-down direction (the vertical direction) along the cylinder axis A of the internal combustion engine 1. That is, the mounting portion 33 has a long thin shape (or an elongated shape) extending in the up-down direction (the vertical direction), and its upper end surface 34 is fixed to the vehicle body-side mounting bracket 7. The upper end surface 34 is formed so as to be horizontal in a state in which the internal combustion engine 1 is mounted on the vehicle body.

The mounting portions 33 provided at the internal combustion engine-side mounting bracket 6 are a first mounting portion 33a located at one end side, in the internal combustion engine width direction, of the internal combustion engine-side mounting bracket 6, a second mounting portion 33b located at the other end side, in the internal combustion engine width direction, of the internal combustion engine-side mounting bracket 6, and a third mounting portion 33c located at the middle, in the internal combustion engine width direction, of the internal combustion engine-side mounting bracket 6. Regarding the first mounting portion 33a, its upper end surface 34a is fixed to the vehicle body-side mounting bracket 7. Regarding the second mounting portion 33b, its upper end surface 34b is fixed to the vehicle body-side mounting bracket 7. Regarding the third mounting portion 33c, its upper end surface 34c is fixed to the vehicle body-side mounting bracket 7.

In the internal combustion engine 1 of the embodiment described above, an annular gap is provided between the inner peripheral surface of the boss portion through hole 13a and the outer peripheral surface of the second bolt boss portion 32b throughout an entire circumference so that the both (the boss portion through hole 13a and the second bolt boss portion 32b) do not come into contact with each other. Further, in the internal combustion engine 1, an annular gap is provided between the inner peripheral surface of the boss portion through hole 13b and the outer peripheral surface of the fifth bolt boss portion 32e throughout an entire circumference so that the both (the boss portion through hole 13b and the fifth bolt boss portion 32e) do not come into contact with each other. Therefore, the front cover 5 is connected to the internal combustion engine body 8 in a state in which the front cover 5 as a whole does not come into contact with the internal combustion engine-side mounting bracket 6.

With this, in the internal combustion engine 1, since the internal combustion engine-side mounting bracket 6 and the front cover 5 do not come into contact with each other, vibration from the vehicle side (the vehicle body side) is not transmitted from the internal combustion engine-side mounting bracket 6 to the front cover 5, thereby suppressing membrane vibration (or film vibration) that occurs at the front cover 5.

In particular, in the internal combustion engine 1, the gaps are set (provided) between the second bolt boss portion 32b of the internal combustion engine-side mounting bracket 6 and the boss portion through hole 13a of the front cover 5 and between the fifth bolt boss portion 32e of the internal combustion engine-side mounting bracket 6 and the boss portion through hole 13b of the front cover 5 so that these second bolt boss portion 32b and boss portion through hole 13a do not come into contact with each other and these fifth bolt boss portion 32e and boss portion through hole 13b do not come into contact with each other, thereby suppressing membrane vibration (or film vibration) that occurs around the boss portion through holes 13 of the front cover 5.

Both ends, in the width direction of the internal combustion engine body 8, of the internal combustion engine-side mounting bracket 6 are connected to the internal combustion engine body 8 outside the front cover 5. Further, the second bolt boss portion 32b and the fifth bolt boss portion 32e are located at the substantially middle portion, in the width direction of the internal combustion engine body 8, between the both ends of the internal combustion engine-side mounting bracket 6. That is, the internal combustion engine-side mounting bracket 6 is fixed to the internal combustion engine body 8 at the both end portions and the middle portion of the internal combustion engine-side mounting bracket 6 along the width direction of the internal combustion engine body **8.**

Therefore, the internal combustion engine 1 can be stably supported on the vehicle.

Furthermore, in the internal combustion engine 1, the middle portion of the internal combustion engine-side mounting bracket 6 is supported on the internal combustion engine body 8 by the second bolt boss portion 32b and the fifth bolt boss portion 32e, thereby suppressing membrane vibration (or film vibration) that occurs at the middle (the middle in the internal combustion engine width direction) of the internal combustion engine-side mounting bracket 6.

The internal combustion engine 1 is configured so that the front cover boss portions 21 are fixed to the internal combustion engine body 8 with the fixing bolts 20 with the front cover boss portions 21 being pressed against the end surface, located at one end side in the cylinder line direction, of the internal combustion engine body **8.**

That is, since the internal combustion engine 1 is configured so that the front cover boss portions 21 that continue to the respective through hole peripheral edge portions 17 are firmly pressed against the end surface, located at one end side in the cylinder line direction, of the internal combustion engine body 8, the sealing members 18 are firmly sandwiched between the through hole peripheral edge portions 17 and the end surface, located at one end side in the cylinder line direction, of the internal combustion engine body 8. It is therefore possible to improve sealing performance between the through hole peripheral edge portions 17 and the internal combustion engine body 8.

In addition, in the internal combustion engine 1, the front cover boss portions 21 are provided at the middle of the front cover 5, thereby improving rigidity of the front cover 5. Also, since the front cover boss portions 21 are pressed against the end surface, located at one end side in the cylinder line direction, of the internal combustion engine body 8, thereby suppressing membrane vibration (or film vibration) of the front cover 5.

## Claims

1. An internal combustion engine (1) comprising:
a resin front cover (5) covering an end surface, located at one end side in a cylinder line direction, of an internal combustion engine body (8); and
a metal mounting bracket (6) located at the one end side in the cylinder line direction of the internal combustion engine body (8), the mounting bracket (6) overlapping the front cover (5) in the cylinder line direction of the internal combustion engine body (8) so as to cover a part of an outer surface of the front cover (5) with a predetermined gap provided between the mounting bracket (6) and the front cover (5), and connecting the internal combustion engine body (8) to a vehicle,
wherein
the mounting bracket (6) has a boss portion (32b, 32e) which penetrates a through hole (13a, 13b) formed at the front cover (5) and which is fixed to the end surface, located at the one end side in the cylinder line direction, of the internal combustion engine body (8), and
a gap is provided between the through hole (13a, 13b) and the boss portion (32b, 32e) so that these through hole (13a, 13b) and boss portion (32b, 32e) do not come into contact with each other.

2. The internal combustion engine (1) as claimed in claim 1, wherein
the mounting bracket (6) is formed so that its length along a width direction of the internal combustion engine body (8) is longer than that of the front cover (5),
both ends, in the width direction of the internal combustion engine body (8), of the mounting bracket (6) are connected to the internal combustion engine body (8) outside the front cover (5), and
the boss portion (32b, 32e) is located between the both ends, in the width direction of the internal combustion engine body (8), of the mounting bracket (6).

3. The internal combustion engine (1) as claimed in claim 1 or 2, wherein
the front cover (5) has an annular through hole peripheral edge portion (17a, 17b) formed at a periphery of the through hole (13a, 13b) and pressed against the end surface, located at the one end side in the cylinder line direction, of the internal combustion engine body (8), and
a gap between the through hole peripheral edge portion (17a, 17b) and the end surface, located at the one end side in the cylinder line direction, of the internal combustion engine body (8) is sealed by an annular sealing member (18a, 18b).

4. The internal combustion engine (1) as claimed in claim 3, wherein
the front cover (5) has a front cover boss portion (21a, 21b) that supports a middle portion, in the width direction of the internal combustion engine body (8), of the front cover (5) on the end surface, located at the one end side in the cylinder line direction, of the internal combustion engine body (8), and
the front cover boss portion (21a, 21b) is formed so as to be fixed to the end surface, located at the one end side in the cylinder line direction, of the internal combustion engine body (8) and so as to adjacently continue to the through hole peripheral edge portion (17a, 17b).

## Patentansprüche

1. Verbrennungsmotor (1), umfassend:
eine vordere Abdeckung (5) aus Harz, die eine Endfläche, die sich an einer Endseite in einer Zylinderlinienrichtung befindet, eines Verbrennungsmotorkörpers (8) abdeckt; und
eine Befestigungshalterung (6) aus Metall, die sich an der einen Endseite in der Zylinderlinienrichtung des Verbrennungsmotorkörpers (8) befindet, wobei die Befestigungshalterung (6) die vordere Abdeckung (5) in der Zylinderlinienrichtung des Verbrennungsmotorkörpers (8) überlappt, um einen Teil einer Außenfläche der vorderen Abdeckung (5) mit einem vorbestimmten Spalt abzudecken, der zwischen der Befestigungshalterung (6) und der vorderen Abdeckung (5) vorgesehen ist, und den Verbrennungsmotorkörper (8) mit einem Fahrzeug verbindet,
wobei
die Befestigungshalterung (6) einen Vorsprungsabschnitt (32b, 32e) aufweist, der ein Durchgangsloch (13a, 13b) durchdringt, das an der vorderen Abdeckung (5) ausgebildet ist, und der an der Endfläche, die sich an der einen Endseite in der Zylinderlinienrichtung befindet, des Verbrennungsmotorkörpers (8) befestigt ist, und
ein Spalt zwischen dem Durchgangsloch (13a, 13b) und dem Vorsprungsabschnitt (32b, 32e) vorgesehen ist, so dass dieses Durchgangsloch (13a, 13b) und dieser Vorsprungsabschnitt (32b, 32e) nicht miteinander in Kontakt kommen.

2. Verbrennungsmotor (1) nach Anspruch 1, wobei
die Befestigungshalterung (6) so ausgebildet ist, dass ihre Länge entlang einer Breitenrichtung des Verbrennungsmotorkörpers (8) länger als die der vorderen Abdeckung (5) ist,
beide Enden, in der Breitenrichtung des Verbrennungsmotorkörpers (8), der Befestigungshalterung (6) mit dem Verbrennungsmotorkörper (8) außerhalb der vorderen Abdeckung (5) verbunden sind, und
der Vorsprungsabschnitt (32b, 32e) sich zwischen den beiden Enden, in der Breitenrichtung des Verbrennungsmotorkörpers (8), der Befestigungshalterung (6) befindet.

3. Verbrennungsmotor (1) nach Anspruch 1 oder 2, wobei
die vordere Abdeckung (5) einen ringförmigen Durchgangsloch-Umfangskantenabschnitt (17a, 17b) aufweist, der an einem Umfang des Durchgangslochs (13a, 13b) ausgebildet ist und gegen die Endfläche, die sich an der einen Endseite in der Zylinderlinienrichtung befindet, des Verbrennungsmotorkörpers (8) gedrückt wird, und
ein Spalt zwischen dem Durchgangsloch-Umfangskantenabschnitt (17a, 17b) und der Endfläche, die sich an der einen Endseite in der Zylinderlinienrichtung befindet, des Verbrennungsmotorkörpers (8) durch ein ringförmiges Dichtungselement (18a, 18b) abgedichtet ist.

4. Verbrennungsmotor (1) nach Anspruch 3, wobei
die vordere Abdeckung (5) einen vorderen Abdeckungsvorsprungsabschnitt (21a, 21b) aufweist, der einen Mittelabschnitt, in der Breitenrichtung des Verbrennungsmotorkörpers (8), der vorderen Abdeckung (5) an der Endfläche, die sich an der einen Endseite in der Zylinderlinienrichtung befindet, des Verbrennungsmotorkörpers (8) stützt, und
der vordere Abdeckungsvorsprungsabschnitt (21a, 21b) so ausgebildet ist, dass er an der Endfläche, die sich an der einen Endseite in der Zylinderlinienrichtung befindet, des Verbrennungsmotorkörpers (8) befestigt ist und sich angrenzend an den Durchgangsloch-Umfangskantenabschnitt (17a, 17b) fortsetzt.

## Revendications

1. Moteur à combustion interne (1) comprenant :
un couvercle avant en résine (5) recouvrant une surface d'extrémité, située au niveau d'un côté d'extrémité dans une direction de ligne de cylindre, d'un corps de moteur à combustion interne (8) ; et
un support de montage métallique (6) situé au niveau du côté d'extrémité dans la direction de ligne de cylindre du corps de moteur à combustion interne (8), le support de montage (6) chevauchant le couvercle avant (5) dans la direction de ligne de cylindre du corps de moteur à combustion interne (8) de manière à recouvrir une partie d'une surface externe du couvercle avant (5) avec un espace prédéterminé prévu entre le support de montage (6) et le couvercle avant (5), et reliant le corps de moteur à combustion interne (8) à un véhicule,
dans lequel
le support de montage (6) a une partie de bossage (32b, 32e) qui pénètre dans un trou traversant (13a, 13b) formé au niveau du couvercle avant (5) et qui est fixée à la surface d'extrémité, située au niveau du côté d'extrémité dans la direction de ligne de cylindre, du corps de moteur à combustion interne (8), et
un espace est prévu entre le trou traversant (13a, 13b) et la partie de bossage (32b, 32e) de sorte que le trou traversant (13a, 13b) et la partie de bossage (32b, 32e) ne viennent pas en contact l'un avec l'autre.

2. Moteur à combustion interne (1) selon la revendication 1, dans lequel
le support de montage (6) est formé de sorte que sa longueur le long d'une direction de largeur du corps de moteur à combustion interne (8) est plus longue que celle du couvercle avant (5),
les deux extrémités, dans la direction de largeur du corps de moteur à combustion interne (8), du support de montage (6) sont reliées au corps de moteur à combustion interne (8) à l'extérieur du couvercle avant (5), et
la partie de bossage (32b, 32e) est située entre les deux extrémités, dans la direction de largeur du corps de moteur à combustion interne (8), du support de montage (6).

3. Moteur à combustion interne (1) selon la revendication 1 ou 2, dans lequel
le couvercle avant (5) a une partie de bord périphérique de trou traversant annulaire (17a, 17b) formée au niveau d'une périphérie du trou traversant (13a, 13b) et pressée contre la surface d'extrémité, située au niveau du côté d'extrémité dans la direction de ligne de cylindre, du corps de moteur à combustion interne (8), et
un espace entre la partie de bord périphérique de trou traversant (17a, 17b) et la surface d'extrémité, située au niveau du côté d'extrémité dans la direction de ligne de cylindre, du corps de moteur à combustion interne (8) est scellé par un élément d'étanchéité annulaire (18a, 18b).

4. Moteur à combustion interne (1) selon la revendication 3, dans lequel
le couvercle avant (5) a une partie de bossage de couvercle avant (21a, 21b) qui supporte une partie centrale, dans la direction de largeur du corps de moteur à combustion interne (8), du couvercle avant (5) sur la surface d'extrémité, située au niveau du côté d'extrémité dans la direction de ligne de cylindre, du corps de moteur à combustion interne (8), et
la partie de bossage de couvercle avant (21a, 21b) est formée de manière à être fixée à la surface d'extrémité, située au niveau du côté d'extrémité dans la direction de ligne de cylindre, du corps de moteur à combustion interne (8) et de manière à continuer de manière adjacente à la partie de bord périphérique de trou traversant (17a, 17b).
